# EUROPEAN PATENT SPECIFICATION

(11) **EP 4 281 423 B1**
(45) Date of publication and mention of the grant of the patent: **07.08.2024**
(21) Application number: 22773627.9
(22) Date of filing: 06.09.2022
(51) Int. Cl.: C03C 25/321, C09J 105/00, D04H 1/64, D04H 1/4209, D04H 1/4218, D04H 1/58

(54) **NEW BINDING COMPOSITION FOR MULTIPLE APPLICATIONS**
NEUE BINDUNGSZUSAMMENSETZUNG FÜR MEHRERE ANWENDUNGEN
NOUVELLE COMPOSITION DE LIAISON POUR DE MULTIPLES APPLICATIONS

(30) Priority: 07.09.2021 IT 202100023075
(43) Date of publication of application: 29.11.2023
(73) Proprietor: STM Technologies S.r.l., 20122 Milano (IT)
(72) Inventor: LA GRECA, Marco, 24040 Calvenzano (BG) (IT); MASSINI, Roberto, 24040 Calvenzano (BG) (IT)
(74) Representative: Botti & Ferrari S.p.A.
(86) International application number: PCT/EP2022/074727
(87) International publication number: WO 2023/036771

(56) References cited:
- WO-A1-2013/179323
- WO-A1-2015/177114
- WO-A1-2016/186459
- WO-A1-2017/108814

## Description

### Field of application

In its more general aspect, the present invention relates to an aqueous binding composition (binder) having multiple applications.

In particular, the present invention relates to an aqueous and formaldehyde-free binding composition comprising one or more reaction products from at least one reducing sugar, at least one sulphamate and/or sulphamic acid and at least one amino acid, preferably but not exclusively glycine and/or lysine.

### Prior art

Mineral fibrous materials, widely used both as thermal and acoustic insulating materials for instance in civil or industrial buildings, are known in the art. These materials are formed by mineral fibers joined together through binding compositions (binders), usually aqueous, which include a curing/cross-linking agent, and which are thermosetting and able to firmly join the fibers by means of high temperature thermal-mechanical treatments. In this regard, the process for the preparation of these mineral fibrous materials generally comprises a first step wherein the so-called "free" (i.e. not joined together) mineral fibers are formed, followed by a step of hot impregnation of said free fibers with binding compositions which polymerize, following the contact and high temperatures, thus firmly joining the fibers together and giving the finished product shape and consistency.

Generally, the binding compositions to be applied onto the mineral fibers are in the form of an aqueous solution containing the thermosetting resin and additives such as a cross-linking catalyst for the resin, a silane which favours the fiber-resin chemical bond, an anti-dust mineral oil, etc. The binding composition is generally applied onto the fibers by spraying.

The properties of the binding composition largely depend on the features of the resin. From the application point of view, the adhesive composition must have a good sprayability and must be able to be deposited onto the surface of the fibers in order to bind them effectively.

Moreover, the resin must be stable for a certain period of time before being used to form the binding composition, said composition being generally prepared at the time of use by mixing the resin and additives mentioned above.

As for compliance with the current regulations, the resin must not be polluting, that is, it must contain - and should generate during the bonding step or subsequently - the smallest possible quantity of compounds that may be harmful to human health or the environment.

The most commonly used thermosetting resins are phenolic resins of the resole class. In addition to their good cross-linking ability at the application temperatures onto the mineral fibers, these resins are relatively inexpensive.

The most common resoles are obtained by condensation of phenol and formaldehyde, in the presence of a basic catalyst. These resoles contain a certain proportion of free monomers, in particular formaldehyde, whose presence is undesirable due to its known harmful effects.

Formaldehyde has long been proven to be a dangerous carcinogen. Therefore, resole-based resins are generally treated with urea, which reacts with free formaldehyde, thus forming phenol-urea-formaldehyde copolymers.

However, it has been noted that, under the resin cross-linking temperature conditions, the urea-formaldehyde condensates are unstable; they decompose giving formaldehyde and urea again, the latter at least partially degrading into ammonia, and being released into the environment, particularly in the processing environment.

Environmental protection regulations have become increasingly stringent and oblige manufacturers of insulation products to find solutions that allows further reducing the levels of undesirable emissions (volatile compounds), in particular of formaldehyde.

For this purpose, various aqueous binding compositions containing compounds capable of polymerizing through a Maillard reaction are known in the art (for a generic reference about the Maillard reaction see, for instance, GP Ellis et al., Advances in Carbohydrate Chem, 1959, pp. 63-134), such as sugars and proteins, or poly or mono-monocarboxylic acids and a source of ammonia, and further comprising different types of polymeric/cross-linking agents.

For instance, WO 2013/179323 patent application discloses a binding composition comprising at least one monosaccharide and an organic salt as curing/cross-linking agent selected from: ammonium sulphamate or sulphamate of an alkaline or alkaline earth metal.

The organic resin produced by polymerization of these binding compositions on mineral fibers is highly biocompatible and formaldehyde-free at detectable levels. However, the bond strength of said organic resin does not have the same efficiency as that ensured by the phenolic resins. For instance, the tensile strength of the finished product is satisfactory but lower than that of a similar product obtained by using a phenolic resin.

EP 3146010 discloses a pre-reacted binding composition comprising the reaction product of at least one carbohydrate component, at least one polyamine acid component and optionally at least one polyamine and/or polyol. The carbohydrate component can be dextrose, fructose, and combinations thereof. The polyamine can be hexamethylenediamine (HDMA) and the polyamine acid can be lysine which can be used in combination with HDMA.

EP2817374 discloses an aqueous binding composition (binder) comprising 3-70% of one or more pentose sugars, 97-30% of one or more hexose sugars, and an amino component which can be HDMA and/or ammonium citrate. The binder may further comprise an amino acid component selected from natural and synthetic amino acids, peptides, and proteins.

EP 2386394 discloses an aqueous binding composition comprising a reducing sugar having 5 carbon atoms which is an aldopentose, a primary diamine which may be HDMA and lysine, and optionally another reducing sugar. A similar binding composition is also disclosed in EP 2669325.

In light of the above, the main purpose of the present invention is to provide a new binding composition that has an improved binding strength and a finished product obtained by the use of such a new binding composition that does not release formaldehyde so as to meet the most stringent regulations on environmental protection and solve the previous drawbacks mentioned with reference to the prior art.

Another purpose of the present invention is to provide a binding composition as above which has a binding strength comparable to that of binding compositions based on phenolic resins.

A further purpose of the present invention is to provide a process for the production of a finished product, in particular a fibrous material, starting from "free" mineral fibers by means of a composition as above which has improved mechanical strength features.

### Summary of the invention

These purposes are primarily achieved by a pre-reacted and formaldehyde-free aqueous binding composition, the composition being suitable to bind mineral fibers and comprising one or more reaction products from at least the following components:
- at least one reducing sugar in a total amount comprised between 50% and 80%;
- at least one sulfamate and/or sulfamic acid in a total amount comprised between 1 and 20%;
- at least one amino acid and/or a salt thereof in an amount comprised between 1 and 30%; and
- at least 2% of a pH-adjusting agent consisting of ammonium hydroxide, an organic and/or inorganic ammonium salt and/or an organic amine or combinations thereof.

In an embodiment, the at least one amino acid is selected from the group consisting of glycine, lysine, glutamic acid, and salts thereof.

In an embodiment, the binding composition comprises an organic amine.

In an embodiment, the pre-reacted binding composition according to the invention may be obtained by a preparation process comprising the step of heating an aqueous solution containing at least one reducing sugar, at least one sulphamate and/or sulphamic acid, at least one amino acid and/or a salt thereof at a temperature comprised between 50°C and 90°C, in particular 60°-80°C for at least 20 minutes, preferably from 20 to 40 minutes. In a preferred embodiment, said aqueous solution to be heated according to the heating step mentioned above also comprises at least one organic amine, such as hexamethylenediamine (HDMA) and/or triethanolamine (TEA).

The Applicant surprisingly found out that an aqueous binding composition as above has an improved binding strength, comparable to that of aqueous binding compositions based on resole resins and, at the same time, does not release polluting emissions, in particular formaldehyde, like aqueous binding compositions able to polymerize through a Maillard reaction as those disclosed in WO 2013/179323 patent application.

When used as a binder of mineral fibers such as rock or glass fibers, the aqueous binding composition according to the invention advantageously allows obtaining a fibrous product with improved mechanical properties, in particular greater strength to traction and/or to compression. Moreover, the composition according to the invention allows obtaining a thermal-insulating fibrous product, for instance of glass fiber, which surprisingly has a better thickness recovery of the rolled up and compressed fibrous product, a very important property to ensure its adequate thermal strength.

Therefore, the above purposes are also attained by a process for preparing a mineral fibrous material which uses an aqueous binding composition as indicated above. Said process comprises the steps of:
- forming free mineral fibres of glassy or rocky material;
- applying an aqueous binding composition as indicated above to said free mineral fibres, forming mineral fibre agglomerates with said binding composition; and
- subjecting said agglomerates to a thermal treatment at a temperature capable of hardening said binding composition, thus obtaining said fibrous material.

The above purposes are also attained by a bound mineral fibre-based fibrous material obtainable by means of a process as indicated above.

In an embodiment, the mineral fibrous material obtained according to the process of the invention is a glass wool fibrous material having the following properties:
- Density 6 - 110 kg/m³
- Binding content 5 - 20%
- Parting Strength at least 170 g/gf according to ASTM C 685- 90
- At least 100% of nominal thickness recovery, according to EN 824, for mats rolled up under pressure (compression ratio greater than 4.5) and at least 100% of thickness recovery for panels packaged under pressure.

In another embodiment, the mineral fibrous material obtained according to the process of the invention is a mineral rock wool fibrous material having the following properties:
- Density 20 - 250 kg/m³
- Binding content 1 - 20%
- At least 60 KPa of compression according to EN 826
- 100% of nominal thickness recovery for panels packaged under pressure.

### Detailed description

In the present description and in the following claims, "aqueous binding composition" indicates an aqueous solution obtained by making at least part of the components of the composition pre-react in water to form a prepolymer (also called pre-condensate) comprising one or more reaction products from at least one reducing sugar and at least one component containing nitrogen as potential binding agent (binder) for fibrous material.

For the purposes of the present invention, by the term "formaldehyde-free" when referring to the binding composition according to the invention or to the finished product (fibrous material) obtained through the use thereof, it is meant that the binding composition and/or the finished product release less than 8 µg/m²/h of formaldehyde, preferably less than 5 µg/m²/h of formaldehyde, even more preferably less than 3 µg/m²/h of formaldehyde. Preferably, the determination is performed according to the standard ISO 16000 relating to the aldehyde emission test.

Unless otherwise specified, percentage of a component in a composition according to the invention indicates the percentage by weight of said component with respect to the total weight of the components of the composition, considered dry, i.e. in the absence of water (dry composition).

For the purposes of the present description and of the following claims, unless otherwise indicated, all numbers expressing quantities, amounts, percentages, and so on, must be meant as modified in all cases by the term "about". Moreover, all ranges include any combination of the described maximum and minimum points and include any intermediate ranges therein, which may or may not be specifically listed herein.

As used in the description and in the appended claims, the singular forms "one", "a" and "the" include plural referents unless clearly otherwise indicated by the context.

The features of the embodiments of the present invention herein described may be combined in whatever way, even forming further embodiments which are not explicitly described but which fall within the scope of the present invention.

The composition of the invention may be conveniently used in preparing fibrous material, such as for instance glass or rock wool. Said fibrous material, typically for use as thermal and/or acoustic insulating material, may be prepared through known techniques which provide for the initial formation of free glass or rock fibres, followed by impregnation of said fibers with a binding composition (binder), and by successive hot polymerization of the latter in order to firmly bind the mineral fibres together.

As previously indicated, the aqueous binding composition according to the invention comprises at least one reducing sugar. The at least one reducing sugar is present in a total amount (i.e. inclusive of all of the reducing and non-reducing sugars present in the composition) comprised between 50% and 80%.

The term "reducing sugar" is to be intended conventionally, i.e. it may be any monosaccharide or a polysaccharide that carries a free hemiacetal OH group having a reducing action, in particular in cupro-alkaline solutions.

The monosaccharides can be both ketone and aldehyde, triose, pentose and/or hexose, having both L and D anomeric configurations, or mixtures thereof. Therefore, examples of usable monosaccharides are: glucose, fructose, galactose, xylose, arabinose, ribose, lyxose, mannose, rhamnose and the like. Said monosaccharides may be purchased and used as such, or may be obtained through known methods, such as for instance chemical reduction of disaccharides or polysaccharides in general, such as, inter alia, sucrose, maltose and the like.

In a preferred embodiment, said monosaccharide is selected from: fructose and glucose (also called dextrose) and combinations thereof, in a total amount comprised between 50% and 80% by weight.

In an embodiment, the present composition contains at least one or two monosaccharides, at least one of which is preferably glucose. In a preferred embodiment, the present composition comprises at least one aldehyde monosaccharide, such as for instance glucose, and at least one ketone monosaccharide, such as fructose.

In particular, the presence of at least glucose allows obtaining improved binding properties of the composition and stability properties of the fibrous material.

When present, the two aldehyde (for instance glucose) and ketone (for instance fructose) monosaccharides may be preferably in a weight ratio of about 1: 1 with each other, or one of the two monosaccharides is present in slight excess, such as for instance in a ratio preferably comprised between 1:1.05 and 1:1.3. In an embodiment, the present composition contains fructose and glucose in a ratio from 1: 1.05 to 1: 1.25 and in a total amount comprised between 50% and 80% by weight on the weight of the dried composition.

The reducing polysaccharide in the binding composition according to the invention is selected from the reducing polysaccharides having a weight average molecular weight lower than 1,000,000, preferably lower than 100,000, more preferably lower than 50,000, advantageously lower than 10,000 and even better above 180.

Preferably, the reducing polysaccharide contains at least one glucose unit. Polysaccharides mainly (over 50% by weight) consisting of glucose units are particularly preferred.

The polysaccharide is treated in acid environment before use.

The aqueous binding composition according to the invention further comprises at least one sulfamate.

The term "sulfamate" is intended to include salts of sulphamic acid, in particular compounds (salts) that are non-volatile and sufficiently stable for storage. Preferably, sulfamate is selected from the group consisting of ammonium sulfamate, sulfamate of an alkaline or alkaline earth metal, sodium N-cyclohexylsulfamate and combinations thereof. The pre-reacted aqueous binding composition according to the invention may further comprise sulphamic acid alone or in combination with one or more sulfamates as indicated above.

In an embodiment, sulfamate is selected from ammonium sulfamate, sulfamate of an alkaline or alkaline earth metal and combinations thereof. Preferably, sulfamate is ammonium sulfamate.

Sulfamate acts as a curing/cross-linking agent, and in particular contributes to the formation of melanoidin derivatives, generally by polymerization through the Maillard reaction, with the at least one reducing sugar (for instance monosaccharide), during the preparation of the fibrous material. In particular, the Maillard reaction leads to the formation of aromatic molecules with high molecular weight or blends of aromatic polymers and/or polymers containing nitrogen (melanoidins) which allow the composition to take on binding and thermosetting features, necessary to effectively act as a binder for mineral fibers. In particular, said melanoidins may have a carbon:nitrogen ratio, and a degree of unsaturation and aromaticity that may significantly vary depending on the temperature (for a general reference see Ames et al. The Maillard Browning Reaction, Chemistry and Industry, 1988, 7, 558-561).

Examples of usable sulfamates are selected from: sulfamate of sodium, potassium, calcium, magnesium and ammonium, ammonium sulfamate (CAS N: 7773-06-0) being preferred. In particular, ammonium sulfamate, having general formula H₂NSO₃-NH₄⁺(CHEBI:81950), is classified as an organic (non-carboxylic) salt that is easy to handle as it has low toxicity and is not irritating by skin contact. It can be prepared for instance by hydrolysis of the reaction product obtained by treating urea with fuming sulfuric acid or it can be purchased on the market. In the aqueous binding composition according to the invention, the at least one sulfamate and/or sulphamic acid, in particular ammonium sulfamate and/or sulfamate of an alkaline or alkaline earth metal, is/are present in a total amount comprised between 1 and 20% by weight, in particular between 1 and 10%.

According to the present invention, the binding composition further comprises at least one amino acid and/or a salt thereof.

The term "amino acid" indicates any organic compound containing at least one carboxyl function and at least one amino function and wherein the at least one amino function is able to react with the at least one reducing sugar (sugar component) of the binder composition. The amino acid may be of natural or synthetic origin and is preferably an α-amino acid, that is an organic molecule in which a carboxyl function and an amino function are linked to the same carbon atom.

In a preferred embodiment, the at least one amino acid is selected from the group consisting of glycine, lysine, glutamic acid, and salts thereof.

The at least one amino acid is present in the binding composition in an amount comprised between 1% and 30%.

The binding composition according to the invention further comprises a pH-adjusting agent bringing amino groups into the final resin consisting of ammonium hydroxide (NH₄OH), an organic and/or inorganic ammonium salt and/or an organic amine and combinations thereof.

In an embodiment, the pH-adjusting agent also constitutes a source of ammonia and is selected from ammonium hydroxide (NH₄OH), an organic or inorganic ammonium salt and combinations thereof.

In this regard, examples of usable organic ammonium salts are salts of mono or polycarboxylic organic acids, preferably selected from: citric acid, tartaric acid, glycolic acid, malic acid, and lactic acid. Usable inorganic ammonium salts are preferably selected from ammonium phosphate and ammonium sulphate.

In another embodiment of the invention, the pH-adjusting agent is selected from one or more primary, secondary, or tertiary organic amines, possibly having further functional groups which are used alone or in combination with hydroxide and/or ammonium salts in partial replacement thereof.

Preferably, the organic amine is selected from the group consisting of 2-amino-2-methyl-propanol (AMP), hexamethylenediamine (HDMA), bis(hexamethylene)triamine and triethanolamine (TEA).

The use in the binding composition according to the invention of at least one organic amine, in particular of at least one amine as indicated above, in association with at least one amino acid, advantageously allows further increasing cohesion on the fibers of the binding composition, as clear from the experimental part reported further in the present document.

In the composition according to the invention, the pH-adjusting agent, be it ammonium hydroxide, an ammonium salt and/or an organic amine, or combinations thereof, is present in a total amount of at least 2%, preferably between 2 and 20% by weight on the weight of the dry composition, so as to adjust the pH of the composition of the invention to values comprised between 6 and 10, for instance between 6 and 9.

At this pH, a higher polymerization rate of the present composition is observed during the preparation of the mineral fibrous material.

It was surprisingly found out that the at least one amino acid acts as a cross-linking agent for the reducing sugar in synergy with sulfamate during the preparation of the binding composition and the successive hardening thereof for the preparation of the fibrous material by binding to one or more reducing sugars. This allows the pre-reacted binding composition according to the invention to have thermosetting features and a binding capacity of mineral fibers that can be significantly higher than the binding capacity of a similar binding composition containing sulfamate as a cross-linking agent but amino acids-free and of a similar composition containing amino acids but sulfamate-free. This effect is even more pronounced where the binding composition according to the invention also comprises an organic amine such as for instance HDMA or TEA.

The composition of the invention may also contain additional components used, for instance, to improve its resistance to temperature and/or to further favour the polymerization process of the composition during the formation of the mineral fibrous material.

In particular, said possible additional components, present individually or mixed with each other, may comprise an acrylic component as described in detail hereinafter, mineral oils, generally present as an emulsion in an amount comprised between 2 and 6% by weight, amino silanes, preferably in an amount comprised between 0.1% and 0.2% by weight, polysiloxanes, preferably in an amount comprised between 0.1% and 0.5% by weight and the like, urea and lignosulfonates, for instance calcium or ammonium lignosulfonate. Said possible additional components may be present both individually and mixed with each other. In particular, in an embodiment of the invention, the acrylic component, present as the aforementioned additional component, is preferably in the form of an emulsion and may be selected from: acrylic resin, preferably having an acid pH (generally comprised between 2 and 4), and a carboxylic polymer mixed with a polyol. In this regard, heat-resistant aqueous resins, selected for instance from Acrodur^{®} Plus 2580 BASF or the corresponding DOW or other similar ones, are usable acrylic resins.

The preferred carboxylic polymers are obtained starting from acrylic or methacrylic acid.

Polyol is selected for instance from: polyethers, polypropylene glycol, polyesters and the like. Preferably, the molecular weight of said acrylic component is comprised between 500 and 10,000, preferably between 500 and 8,000 Dalton.

When present, said acrylic component is usable in an amount up to 20% by weight, preferably up to 15% by weight, even more preferably up to 10% of the total weight of the dried composition. This addition advantageously allows increasing the binding force of the composition, with consequent improvement of the mechanical and elastic properties of the glass or rock fibrous material comprising the present composition, for instance as regards the elastic recovery after compression of glass fiber felts, generally used as thermal and acoustic insulators.

Advantageously, the aqueous binding composition (binder) of the present invention is further characterized in that it is stable over time (even for some days) and that the formation of for instance molds, gelling or decomposition products, which may often be present in the case of storage of the prior art aqueous binding compositions containing other polymerizers/crosslinkers, is not noted.

The pre-reacted binding composition of the invention may be prepared easily and in as short time, without using potential sources of formaldehyde, by using water as a solvent and through a process that is easily applicable even on an industrial scale.

In particular, the pre-reacted binding composition according to the invention may be prepared by means of a process that comprises the steps of:
- preparing an aqueous mixture comprising at least one reducing sugar, at least one sulfamate and/or sulphamic acid and at least one amino acid and/or a salt thereof,
- reacting said components in the mixture, so as to form at least one prepolymer in said mixture as one or more reaction products of said mixture components.

Preferably, in the reaction step the above mixture is heated at a temperature comprised between 50°C and 90°C, in particular 60°-80°C for at least 20 minutes, preferably from 20 to 40 minutes. In this way an aqueous mixture containing at least one prepolymer as one or more reaction products of the above components of the solution is obtained.

At the end of the reaction, any additional components of the composition as indicated above may be added to a previously cooled aqueous solution containing at least one prepolymer, and water may also be added to obtain an aqueous binding composition of the invention in the desired concentration.

In an embodiment, the above aqueous mixture may also comprise a pH-adjusting agent selected from the group consisting of ammonium hydroxide (NH₄OH), an organic and/or inorganic ammonium salt, an organic amine, and combinations thereof. Said pH-adjusting agent may be added in the preparation step of the aqueous mixture or alternatively or additionally after the reaction step and namely to the aqueous mixture containing at least one prepolymer, along with any other additional components and dilution water to obtain the desired concentration.

All of the components of the binding composition of the invention are easily retrievable and purchasable on the market and many of them, such as the reducing sugar, are of natural origin.

In a further aspect, the invention relates to the use of the present binding composition in the preparation of glass or rocky mineral fibers.

In this direction, the present invention refers to a fibrous material comprising mineral fibres, preferably glass or rock fibers, joined together by using the present aqueous binding composition (binder). Therefore, a further purpose of the invention is a mineral fibrous material obtained starting from free mineral fibers, by means of a process that comprises at least one polymerization step of the binding composition of the invention, at a temperature such as to harden and polymerize the binding composition.

In this regard, said mineral fibrous material may be conveniently prepared by means of a process comprising the steps of:
- forming free fibres, preferably by fusion of glassy (such as for instance mixtures of alkaline borosilicates) or rocky (such as for instance mixtures of basalt, dolomite, slag and limestone) material;
- applying an aqueous binding composition as indicated above to said free mineral fibres, forming mineral fibres agglomerates with the binding composition of the invention, preferably by spraying said composition onto the free fibers; and
- subjecting said agglomerates to a thermal treatment at a temperature capable of hardening and polymerizing the binding composition.

The latter thermal treatment occurs at a temperature of at least 180°C, preferably at a temperature comprised between 180°C and 250°C and more preferably comprised between 180°C and 220°C, typically in polymerization stoves, and triggers the polymerization process of the binding composition of the invention, which stably binds to the fibers, thus forming the final fibrous material, ready for use. Said thermal treatment may occur by the use of hot air circulating in the stove through variable pressure fans, for a variable time depending on the speed of the stove, for instance as a function of the weight per surface unit of the finished product.

If necessary, the step of thermal treatment for the polymerization/hardening of the binding composition is preceded by an orientation step of the fibers (or "crimping") which allows orienting the fibers in a vertical position, thus increasing their strength to compression.

The step of applying the binding composition onto the free fibres is preferably carried out by impregnation, in particular by spraying the aqueous composition of the invention onto the free fibers that have just been hot formed, through the use of equipment known in the art and commonly used in the preparation of mineral fibrous material. At the end of the application step, the agglomerates of the mineral fibers are obtained with the composition of the invention, typically having a parallelepiped section, in the form of panels or rolled up felts.

Generally, the binding composition (binder) content in the fibrous product after hardening is comprised between 1% and 20% by weight on the total weight of the fibrous material.

Analogously, the step of forming the free fibres (commonly indicated as "fibering process") may conveniently occur by means of operations known to the person skilled in the art and that comprise the melting of the starting glassy or rocky material, followed by a passage through an extrusion die connected to a rotor equipped with thousands of holes which, turning at high speed, projects very fine fiber filaments (glass) outward, which are ready to be put in contact with the binding composition according to the above application step. In the case of rock fiber, this in the form of high-temperature lava feeds wheels which, turning at high speed, provide the centrifugal force necessary for thinning into fibers (external centrifugation), which are also ready to be immediately put in contact with the aqueous binder.

The final fibrous material, once cut to the required size, may be packaged and used as a thermal and/or acoustic insulator, also displaying excellent mechanical strength, heat resistance and elastic return properties, the latter being intended as the difference between the nominal thickness of the material before and after its packaging. Therefore, in an additional aspect, the invention relates to a mineral fibrous material obtainable through the process as described above. Such a fibrous material generally has a layered structure when viewed from the side and a coloring characterized by dark colored fibers, for instance brownish (dark brown), black, blue, or greenish, which are intertwined with light colored fibers (for instance light brown), so the fibers of different shades may be clearly distinct. The undulations and turns of the lighter fibers can form an aesthetic effect like clouds against a background of the darkest fibers.

Further features and advantages of the present invention will become apparent from the following non-limiting examples.

### Experimental part

### Example 1: Preparation of binding compositions (binders)

Aqueous binding compositions (binders) A-E according to the invention and comparative aqueous binding compositions F-G have been prepared by using the components indicated in the following Table 1 in the respective percentage by weight on the dry weight of the composition:

**Table 1**

| Components | Binder A | Binder B | Binder C | Binder D | Binder E | Binder F | Binder G |
|---|---|---|---|---|---|---|---|
| Dextrose monohydrate | 34 | 29 | 36 | 39 | 32 | 42 | 38 |
| Fructose | 30 | 26 | 34 | 31 | 28 | 35 | 34 |
| Ammonium sulfamate | 7 | 7 | 6 | 7 | 7 | 6 | - |
| Ammonia* | 2 | -2 | - | 3 | 4 | 4 | 2 |
| Citric acid | 5 | - | 6 | 11 | - | 13 | 5 |
| Lysine | 22 | 21 | - | - | - | - | 21 |
| Glycine | - | - | 8 | 9 | - | - | |
| Glutamic acid | - | - | - | - | 21 | - | |
| HDMA** | - | - | 10 | - | 8 | - | |
| TEA*** | - | 15 | | - | - | - | |
| Total | 100 | 100 | 100 | 100 | 100 | 100 | 100 |

| | | | | | | | |
|---|---|---|---|---|---|---|---|
| * as dry weight, coming from a 25% ammonia aqueous solution ** HDMA = Hexamethylenediamine *** TEA = Triethanolamine | | | | | | | |

Binders A-C have been prepared by mixing the respective components in water and by heating the resulting mixture at 60°C for 30 minutes, thus obtaining an aqueous solution containing at least one prepolymer and which was optionally diluted to obtain a content of solids of 30% and pH = 8-8.5.

Binder D has been prepared by mixing the respective components in water and by heating the resulting mixture at 60°C for 30 minutes and then at 75°C for 20 minutes, thus obtaining an aqueous solution containing at least one prepolymer and which was optionally diluted to obtain a content of solids of 30% and pH = 8.5.

Binder E has been prepared by mixing the respective components in water and by heating the resulting mixture at 60°C for 30 minutes, thus obtaining an aqueous solution containing at least one prepolymer and which was optionally diluted to obtain a content of solids of 30% and pH = 7.5.

Binder F is a comparative binder containing sulfamate and amino acid-free. It has been prepared by mixing the respective components in water at room temperature and has a content of solids of 30% and pH = 8.5.

Comparative binder G is similar to biobinder A according to the invention but does not contain any sulfamate. It has been prepared in the same way as biobinder A and has a content of solids of 30% and pH = 8.

### Example 2: Preparation of fibrous materials

Binding compositions (binders) A-E according to the invention and comparative binding compositions (binders) F-G of Example 1 and also a commercial resole resin (formaldehyde-fenolo-urea) (DYNEA Prefere 72-5235) as a reference have been used to form glass wool-based insulating products.

The glass wool was produced by means of the internal centrifugation technique in which the molten glass composition is converted into fibers by means of a rotor called "spinner" operating at high rotation speeds, the rotor being equipped with a peripheral band (or disc) provided with a multitude of small orifices. As a result of the centrifugal force, the melt is projected against the perforated peripheral band from which primary filaments of molten mineral material exit through the orifices, filaments which, in turn, are stretched to form thin fibers thanks to the action of a high-temperature gas coming from an annular burner surrounding the disc.

The binding composition was applied to the thin fibers thus obtained and exiting from the rotor by means of an annular sprayer placed below the rotor in order to distribute the binding composition evenly onto the fibers and obtain agglomerates of fibers ("mats") impregnated with the binding composition.

Said agglomerates were collected on a conveyor belt and sent to an oven kept at a temperature of at least 180°C where they were left to stand for a time enough to allow the polymerization (hardening) of the composition and the bond with the fibers, thus obtaining fibrous materials which are substantially parallelepiped shaped.

The fibrous materials have been prepared with the above described process by using the same fibering parameters, same content of binding composition (7%) and substantially have the same density (20 kg/m³) and thickness (about 100 mm).

The mechanical properties of these fibrous materials, with reference to the tensile strength, were measured according to the ASTM standard C 685-90 "Parting Strength of Mineral Fiber Batt - and Blaket -Type Insulation" by measuring the breaking load (in gram force "gf") and calculating the tensile strength as "parting strength" as gram force per sample gram as required by the concerned ASTM standard. The specimens subjected to the test substantially have the same fiber diameter, the same density and approximately the same binder content.

The results have been summed up in the following Table 2.

**Table 2**

| Binding composition | Tensile strength (gf/g) |
|---|---|
| A (according to the invention) | 195-200 |
| B (according to the invention) | 200-210 |
| C (according to the invention) | 220-240 |
| D (according to the invention) | 195-200 |
| E (according to the invention) | 210-220 |
| F (comparative with sulfamate and without amino acids) | 180-190 |
| G (comparative with amino acid and without sulfamate) | 150-160 |
| Reference (phenolic resin) | 220-250 |

From the above Table 2, it can be noted that all of the fibrous materials obtained by using binding compositions (A-E) according to the invention have mechanical strength properties better than those of fibrous materials obtained by using a binding composition containing sulfamate but amino acid-free (comparative composition F) or better than those of fibrous materials obtained by using a binding composition containing an amino acid but sulfamate-free (comparative composition G).

The presence of ammonium sulfamate along with an organic amine such as in particular HDMA, in addition to an amino acid such as glycine, lysine or glutamic acid (Compositions B, C and E) leads to a significant increase of the mechanical strength properties of the fibrous materials obtained by using these compositions compared to the mechanical strength properties of fibrous materials obtained by using similar organic amine-free binding compositions (Compositions A and D).

Moreover, the exemplified binding compositions according to the invention have mechanical strength properties substantially comparable to those of the reference phenolic resin but, unlike the latter, do not contain or release formaldehyde.

## Claims

1. Pre-reacted and formaldehyde-free aqueous binding composition, the composition being suitable to bind mineral fibres and comprising one or more reaction products from at least the following components, in percentages by weight on the dry weight of the composition:
- at least one reducing sugar in a total amount comprised between 50% and 80%;
- at least one sulphamate and/or sulphamic acid in a total amount comprised between 1% and 20%;
- at least one amino acid and/or a salt thereof in an amount comprised between 1% and 30%;
- at least 2% of a pH-adjusting agent constituted by ammonium hydroxide, an organic and/or inorganic ammonium salt and/or an organic amine or combinations thereof.

2. Binding composition according to claim 1, wherein the at least one reducing sugar is selected from monosaccharides, preferably glucose, fructose, galactose, xylose, arabinose, ribose, lyxose, mannose, rhamnose, in particular glucose and fructose, and polysaccharides having a weight average molecular weight lower than 1,000,000, preferably lower than 100,000, more preferably lower than 50,000, said polysaccharides being used after acid treatment.

3. Binding composition according to claim 1 or 2, wherein the at least one sulphamate is selected from the group constituted by ammonium sulphamate, sulphamate of an alkaline or alkaline earth metal, sodium N-cyclohexylsulfamate and combinations thereof.

4. Binding composition according to any one of the preceding claims, wherein said at least one sulphamate and/or sulphamic acid is present in a total amount comprised between 1 and 10%.

5. Binding composition according to any one of the preceding claims, wherein said pH-adjusting agent is present in an amount between 2% and 20%, so as to adjust the pH to values comprised between 6 and 10, for example 6 and 9.

6. Binding composition according to any one of the preceding claims, wherein said organic ammonium salt is the ammonium salt of an acid selected from: citric acid, tartaric acid, glycolic acid, malic acid, and lactic acid.

7. Binding composition according to any one of the preceding claims, wherein said organic amine is selected from the group consisting of 2-amino-2-methyl-propanol (AMP), hexamethylenediamine (HDMA), bis(hexamethylene)triamine and triethanolamine (TEA).

8. Binding composition according to any one of the preceding claims, wherein said at least one amino acid is selected from the group constituted by glycine, lysine, glutamic acid, salts thereof and combinations thereof.

9. Binding composition according to any one of the preceding claims, further comprising one or more mineral oils and/or one or more amino silanes, and/or one or more siloxanes or mixtures thereof.

10. Binding composition according to any one of the preceding claims, further comprising at least one acrylic component having molecular weight comprised between 500 and 10,000.

11. Use of the aqueous binding composition according to any one of the previous claims, in the preparation of mineral fibrous material.

12. Process for preparing a pre-reacted binding composition according to any one of the preceding claims from 1 to 10, the process comprising the steps of:
- preparing an aqueous mixture comprising at least one reducing sugar, at least one sulphamate and/or sulphamic acid, at least one amino acid and/or a salt thereof, and at least one pH-adjusting agent constituted by ammonium hydroxide, an organic and/or inorganic ammonium salt and/or an organic amine or combinations thereof;
- reacting said components in the mixture, so as to form at least one prepolymer in said mixture as one or more reaction products of said mixture components.

13. Process according to claim 12, wherein during the reaction step said mixture is heated at a temperature comprised between 50°C and 90°C, in particular 60°-80°C, for at least 20 minutes, preferably from 20 to 40 minutes.

14. Process for preparing a fibrous material starting from free mineral fibres, said process comprising the steps of:
- forming free mineral fibres of glassy or rocky material;
- applying an aqueous binding composition according to any one of claims 1 to 10 to said free mineral fibres, thus forming mineral fibre agglomerates with said binding composition; and
- subjecting said agglomerates to a thermal treatment at a temperature capable of hardening said binding composition, thus obtaining said fibrous material.

15. Process according to claim 14, wherein the thermal treatment occurs at a temperature of at least 180°C.

16. Mineral fibrous material obtainable by the process according to claims 14 or 15.

17. Mineral fibrous material according to claim 16, which is a glass wool fibrous material having the following properties:
- Density 6 - 110 kg/m³
- Binding content 5 - 20%
- Parting Strength at least 170 g/gf according to ASTM C 685- 90
- At least 100% of nominal thickness recovery, according to EN 824, for mats rolled up under pressure (compression ratio greater than 4.5) and at least 100% of thickness recovery for panels packaged under pressure.

18. Mineral fibrous material according to claim 16, which is a mineral rock wool fibrous material having the following properties:
- Density 20 - 250 kg/m³
- Binding content 1 - 20%
- At least 60 KPa of compression according to EN 826
- 100% of nominal thickness recovery for panels packaged under pressure.

## Patentansprüche

1. Vorreagierte und formaldehydfreie wässrige Bindemittelzusammensetzung, wobei die Zusammensetzung geeignet ist, Mineralfasern zu binden, und ein oder mehrere Reaktionsprodukte aus mindestens den folgenden Komponenten, in Gewichtsprozenten auf das Trockengewicht der Zusammensetzung, enthält:
- mindestens einen reduzierenden Zucker in einer Gesamtmenge zwischen 50 und 80 %;
- mindestens ein Sulfamat und/oder eine Sulfaminsäure in einer Gesamtmenge zwischen 1 und 20 %;
- mindestens eine Aminosäure und/oder ein Salz davon in einer Menge zwischen 1 % und 30 %;
- mindestens 2 % eines Mittels zur Einstellung des pH-Werts, das aus Ammoniumhydroxid, einem organischen und/oder anorganischen Ammoniumsalz und/oder einem organischen Amin oder Kombinationen davon besteht.

2. Bindemittelzusammensetzung nach Anspruch 1, wobei der mindestens eine reduzierende Zucker ausgewählt ist aus Monosacchariden, vorzugsweise Glucose, Fructose, Galactose, Xylose, Arabinose, Ribose, Lyxose, Mannose, Rhamnose, insbesondere Glucose und Fructose, und Polysacchariden mit einem mittleren Molekulargewicht von weniger als 1.000.000, vorzugsweise weniger als 100.000, besonders bevorzugt weniger als 50.000, wobei die Polysaccharide nach einer Säurebehandlung verwendet werden.

3. Bindemittelzusammensetzung nach Anspruch 1 oder 2, wobei das mindestens eine Sulfamat aus der Gruppe ausgewählt ist, die aus Ammoniumsulfamat, Sulfamat eines Alkali- oder Erdalkalimetalls, Natrium-N-cyclohexylsulfamat und Kombinationen davon besteht.

4. Bindemittelzusammensetzung nach einem der vorhergehenden Ansprüche, wobei das mindestens eine Sulfamat und/oder die mindestens eine Sulfaminsäure in einer Gesamtmenge zwischen 1 und 10 % vorhanden ist.

5. Bindemittelzusammensetzung nach einem der vorhergehenden Ansprüche, wobei das Mittel zur Einstellung des pH-Werts in einer Menge zwischen 2 % und 20 % vorhanden ist, so dass der pH-Wert auf Werte zwischen 6 und 10, beispielsweise 6 und 9, eingestellt wird.

6. Bindemittelzusammensetzung nach einem der vorhergehenden Ansprüche, wobei das organische Ammoniumsalz das Ammoniumsalz einer Säure ist, ausgewählt aus: Zitronensäure, Weinsäure, Glykolsäure, Apfelsäure und Milchsäure.

7. Bindemittelzusammensetzung nach einem der vorhergehenden Ansprüche, wobei das organische Amin ausgewählt ist aus der Gruppe, bestehend aus 2-Amino-2-methyl-propanol (AMP), Hexamethylendiamin (HDMA), Bis(hexamethylen)triamin und Triethanolamin (TEA).

8. Bindemittelzusammensetzung nach einem der vorhergehenden Ansprüche, wobei die mindestens eine Aminosäure aus der Gruppe ausgewählt ist, die aus Glycin, Lysin, Glutaminsäure, deren Salzen und Kombinationen davon besteht.

9. Bindemittelzusammensetzung nach einem der vorangehenden Ansprüche, ferner umfassend ein oder mehrere Mineralöle und/oder ein oder mehrere Aminosilane und/oder ein oder mehrere Siloxane oder Mischungen davon.

10. Bindemittelzusammensetzung nach einem der vorangehenden Ansprüche, die ferner mindestens eine Acrylkomponente mit einem Molekulargewicht zwischen 500 und 10.000 enthält.

11. Verwendung der wäßrigen Bindemittelzusammensetzung nach einem der vorhergehenden Ansprüche bei der Herstellung von Mineralfasermaterial.

12. Verfahren zur Herstellung einer vorreagierten Bindemittelzusammensetzung nach einem der vorhergehenden Ansprüche 1 bis 10, wobei das Verfahren die folgenden Schritte umfasst:
- Herstellen eines wässrigen Gemisches, das mindestens einen reduzierenden Zucker, mindestens ein Sulfamat und/oder eine Sulfaminsäure, mindestens eine Aminosäure und/oder ein Salz davon und mindestens ein Mittel zur Einstellung des pH-Werts enthält, das aus Ammoniumhydroxid, einem organischen und/oder anorganischen Ammoniumsalz und/oder einem organischen Amin oder Kombinationen davon besteht;
- Umsetzen der Komponenten in der Mischung, so dass mindestens ein Präpolymer in der Mischung als ein oder mehrere Reaktionsprodukte der Komponenten der Mischung gebildet wird.

13. Verfahren nach Anspruch 12, wobei das Gemisch während des Reaktionsschritts auf eine Temperatur zwischen 50 °C und 90 °C, insbesondere zwischen 60 und 80 °C, für mindestens 20 Minuten, vorzugsweise von 20 bis 40 Minuten, erwärmt wird.

14. Verfahren zur Herstellung eines Fasermaterials ausgehend von freien Mineralfasern, wobei das Verfahren die folgenden Schritte umfasst:
- Bildung von freien Mineralfasern aus glasartigem oder steinartigem Material;
- Aufbringen einer wässrigen Bindemittelzusammensetzung nach einem der Ansprüche 1 bis 10 auf die freien Mineralfasern, wodurch Mineralfaseragglomerate mit der Bindemittelzusammensetzung gebildet werden; und
- Unterziehen der Agglomerate einer thermischen Behandlung bei einer Temperatur, die geeignet ist, die Bindemittelzusammensetzung zu härten, wodurch das Fasermaterial erhalten wird.

15. Verfahren nach Anspruch 14, wobei die thermische Behandlung bei einer Temperatur von mindestens 180 °C erfolgt.

16. Mineralisches Fasermaterial, erhältlich durch das Verfahren nach Anspruch 14 oder 15.

17. Mineralisches Fasermaterial nach Anspruch 16, das ein Glaswolle-Fasermaterial mit den folgenden Eigenschaften ist:
- Dichte 6 bis 110 kg/m³
- Bindemittelgehalt 5 bis 20 %
- Trennfestigkeit mindestens 170 g/gf nach ASTM C 685- 90
- mindestens 100 % der Nennrückstellfähigkeit nach EN 824 für unter Druck aufgerollte Matten (Druckverhältnis größer als 4,5) und mindestens 100 % der Rückstellfähigkeit für unter Druck verpackte Platten.

18. Mineralisches Fasermaterial nach Anspruch 16, das ein mineralisches Steinwolle-Fasermaterial mit den folgenden Eigenschaften ist
- Dichte 20 bis 250 kg/m³
- Bindemittelgehalt 1 bis 20 %
- Mindestens 60 kPa Kompression nach EN 826
- 100 % der Nennrückstellfähigkeit unter Druck verpackter Platten.

## Revendications

1. Composition liante aqueuse exempte de formaldéhyde et ayant préréagi, la composition convenant pour lier des fibres minérales et comprenant un ou plusieurs produits réactionnels parmi au moins les composants suivants, en pourcentages en poids par rapport au poids sec de la composition :
- au moins un sucre réducteur en une quantité totale comprise entre 50 % et 80 % ;
- au moins un sulfamate et/ou de l'acide sulfamique en une quantité totale comprise entre 1 % et 20 % ;
- au moins un acide aminé et/ou un sel de celui-ci en une quantité comprise entre 1 % et 30 % ;
- au moins 2 % d'un agent d'ajustement du pH constitué par l'hydroxyde d'ammonium, un sel d'ammonium organique et/ou inorganique et/ou une amine organique ou leurs combinaisons.

2. Composition liante selon la revendication 1, dans laquelle l'au moins un sucre réducteur est choisi parmi les monosaccharides, de préférence le glucose, le fructose, le galactose, le xylose, l'arabinose, le ribose, le lyxose, le mannose, le rhamnose, en particulier le glucose et le fructose, et les polysaccharides ayant une masse moléculaire moyenne en masse inférieure à 1 000 000, de préférence inférieure à 100 000, mieux encore inférieure à 50 000, lesdits polysaccharides étant utilisés après traitement à l'acide.

3. Composition liante selon la revendication 1 ou 2, dans laquelle l'au moins un sulfamate est choisi dans le groupe constitué par le sulfamate d'ammonium, un sulfamate d'un métal alcalin ou alcalino-terreux, le N-cyclohexylsulfamate de sodium et leurs combinaisons.

4. Composition liante selon l'une quelconque des revendications précédentes, dans laquelle ledit au moins un sulfamate et/ou acide sulfamique est présent en une quantité totale comprise entre 1 et 10 %.

5. Composition liante selon l'une quelconque des revendications précédentes, dans laquelle ledit agent d'ajustement du pH est présent en une quantité comprise entre 2 % et 20 % de façon à ajuster le pH à des valeurs comprises entre 6 et 10, par exemple entre 6 et 9.

6. Composition liante selon l'une quelconque des revendications précédentes, dans laquelle ledit sel d'ammonium organique est le sel d'ammonium d'un acide choisi parmi : l'acide citrique, l'acide tartrique, l'acide glycolique, l'acide malique, et l'acide lactique.

7. Composition liante selon l'une quelconque des revendications précédentes, dans laquelle ladite amine organique est choisie dans le groupe constitué par le 2-amino-2-méthylpropanol (AMP), l'hexaméthylènediamine (HDMA), la bis(hexaméthylène)triamine et la triéthanolamine (TEA).

8. Composition liante selon l'une quelconque des revendications précédentes, dans laquelle ledit au moins un acide aminé est choisi dans le groupe constitué par la glycine, la lysine, l'acide glutamique, leurs sels et leurs combinaisons.

9. Composition liante selon l'une quelconque des revendications précédentes, comprenant en outre une ou plusieurs huiles minérales et/ou un ou plusieurs aminosilanes et/ou un ou plusieurs siloxanes ou leurs mélanges.

10. Composition liante selon l'une quelconque des revendications précédentes, comprenant en outre au moins un composant acrylique ayant une masse moléculaire comprise entre 500 et 10 000.

11. Utilisation de la composition liante aqueuse de l'une quelconque des revendications précédentes dans la préparation d'un matériau fibreux minéral.

12. Procédé pour préparer une composition liante ayant préréagi de l'une quelconque des revendications 1 à 10, le procédé comprenant les étapes de :
- préparation d'un mélange aqueux comprenant au moins un sucre réducteur, au moins un sulfamate et/ou de l'acide sulfamique, au moins un acide aminé et/ou un sel de celui-ci, et au moins un agent d'ajustement du pH constitué par l'hydroxyde d'ammonium, un sel d'ammonium organique et/ou inorganique et/ou une amine organique ou leurs combinaisons ;
- réaction desdits composants dans le mélange, de façon à former au moins un prépolymère dans ledit mélange en tant qu'un ou plusieurs produits réactionnels desdits composants du mélange.

13. Procédé selon la revendication 12, dans lequel, durant l'étape de réaction, ledit mélange est chauffé à une température comprise entre 50°C et 90°C, en particulier 60°-80°C, pendant au moins 20 minutes, de préférence 20 à 40 minutes.

14. Procédé pour préparer un matériau fibreux à partir de fibres minérales libres, ledit procédé comprenant les étapes de :
- formation de fibres minérales libres de matériau vitreux ou rocheux ;
- application d'une composition liante aqueuse de l'une quelconque des revendications 1 à 10 auxdites fibres minérales libres, formant ainsi des agglomérats de fibres minérales avec ladite composition liante ; et
- soumission desdits agglomérats à un traitement thermique à une température capable de durcir ladite composition liante, ce qui donne ainsi ledit matériau fibreux.

15. Procédé selon la revendication 14, dans lequel le traitement thermique a lieu à une température d'au moins 180°C.

16. Matériau fibreux minéral pouvant être obtenu par le procédé de la revendication 14 ou 15.

17. Matériau fibreux minéral selon la revendication 16, qui est un matériau fibreux de type laine de verre ayant les propriétés suivantes :
- masse volumique 6 à 110 kg/m³
- teneur en liant 5 à 20 %
- résistance à la séparation d'au moins 170 g/gf conformément à la norme ASTM C 685-90
- au moins 100 % de récupération d'épaisseur nominale, conformément à la norme EN 824, pour des mats enroulés sous pression (taux de compression supérieur à 4,5) et au moins 100 % de récupération d'épaisseur pour des panneaux conditionnés sous pression.

18. Matériau fibreux minéral selon la revendication 16, qui est un matériau fibreux de type laine de roche minéral ayant les propriétés suivantes :
- masse volumique 20 à 250 kg/m³
- teneur en liant 1 à 20 %,
- au moins 60 kPa de compression conformément à la norme EN 826
- 100 % de récupération d'épaisseur nominale pour des panneaux conditionnés sous pression.
